(19) Europäisches Patentamt / European Patent Office / Office européen des brevets

(11) **EP 2 643 268 B1**

(12) **EUROPEAN PATENT SPECIFICATION**

(45) Date of publication and mention of the grant of the patent:
**12.08.2020 Bulletin 2020/33**

(21) Application number: **11842737.6**

(22) Date of filing: **24.11.2011**

(51) Int Cl.:
*C01B 32/15* (2017.01)     *C01B 3/30* (2006.01)
*B01J 8/00* (2006.01)     *C01B 3/26* (2006.01)
*B82Y 30/00* (2011.01)     *B82Y 40/00* (2011.01)

(86) International application number:
**PCT/CN2011/001956**

(87) International publication number:
**WO 2012/068782 (31.05.2012 Gazette 2012/22)**

(54) **SYSTEM FOR HYDROGEN PRODUCTION**

SYSTEME ZUR WASSERSTOFFPRODUKTION

SYSTÈME DE PRODUCTION D'HYDROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2010 MY PI2010005575**

(43) Date of publication of application:
**02.10.2013 Bulletin 2013/40**

(73) Proprietor: **Tse, Ka Chun**
**Wanchai, Hong Kong (CN)**

(72) Inventors:
• **PETTERS, Stefan**
  **1130 Vienna (AT)**
• **TSE, Ka Chun**
  **HONG KONG (CN)**

(74) Representative: **Eder, Michael et al**
**df-mp Dörries Frank-Molnia & Pohlman**
**Patentanwälte Rechtsanwälte PartG mbB**
**Theatinerstrasse 16**
**80333 München (DE)**

(56) References cited:
WO-A2-2010/086600     CN-A- 1 680 013
CN-A- 1 680 013     CN-A- 101 215 519
DE-B- 1 069 576     GB-A- 701 820
GB-A- 979 720     US-A- 2 482 187
US-A- 2 821 465     US-A- 2 893 849
US-A- 2 985 512     US-A1- 2004 216 669
US-A1- 2009 068 084     US-A1- 2009 286 675
US-E- R E30 464

**Description**

RELATED APPLICATION

This application claims priority from earlier filed Malaysian application no. PI2010005575 filed on 25 November 2010.

FIELD OF THE INVENTION

The present invention is concerned with a system for production of hydrogen gas, carbon materials and/or carbon monoxide gas, and in particular for production of hydrogen gas from a hydrocarbon gas stream directed into a vapour chamber.

BACKGROUND OF THE INVENTION

In biomass gasification, syngas generated contains Hydrogen ($H_2$), carbon monoxide (CO), carbon dioxide ($CO_2$), water ($H_2O$), methane ($CH_4$) and various light hydrocarbons. These light hydrocarbons eventually would form tar and coke, which would lower the heating value of the syngas. The common approach in lowering tar and coke contents would be to allow steam reforming and cracking with water after the gasification process.

It has been demonstrated that catalytic cracking of hydrocarbons can be an effective process for conversion of hydrocarbons into carbon and hydrogen by using transition metal catalyst. European Patent No. 1943187 has disclosed one method of converting hydrocarbons into hydrogen, such conversion can be used to prevent or at least reduce emission of greenhouse gases into the atmosphere. However, there are problems associated with such a method. These problems include high energy consumption during the conversion. Thus, the viability of processes of such a method is highly dependent upon the particular technologies involved and whether it can be justified economically. Further, the viability of the processes would be further increased if the efficiency of hydrogen production can be increased and desired side products are also produced efficiently during the conversion.

A system for the production of hydrogen and carbon comprising two reaction zones, a heating chamber and carbon reactivation zone is disclosed in US 2,985,512. A similar system is disclosed in US 2,482,187, which relates to a process and apparatus for the optimum utilization of the hydrocarbon values derived from solid carbonaceous substances such as coal, shale, lignite, peat, oil sands, and the like.

In the context of continuous, large-scale of hydrocarbon gas splitting and nanocarbon production, a concept of fluidized bed reactor may be used. However, feeding materials like catalysts with different physical densities, sizes inside conventional chamber would be subjected to different circulating speed and this leads to a disappointing catalytic effect. As such, a novel chamber design is proposed to allow materials with different physical densities, sizes could enjoy similar circulating speed inside chamber, so that the produced nanocarbon would have consistent density and at the same time, hydrogen production would be higher due to longer and higher catalytic activity.

The present invention seeks to address the above problems or at least to provide an alternative to the public.

SUMMARY OF THE INVENTION

Disclosed herein is a system for production of hydrogen gas, carbon materials and/or carbon monoxide gas, comprising a reaction chamber for chemical vapour deposition (CVD), wherein the reaction chamber includes an upwardly extending wall defining a cavity having a lower portion and an upper portion with the upper portion having a volume capacity larger than a volume capacity of the lower portion such that longer retention time is provided for material with lower density and for materials with different densities to achieve the same or similar circulating speed in the reaction chamber wherein the wall defines an internal surface provided with a plurality of protrusions extending into the cavity for reducing horizontal cross section of the cavity inside. With this configuration, with the same gas-inflow velocity materials and with different dentities can have different circulating velocities within the chamber such that residence time to reaction can be optimized to deliver a higher yield and better uniformity of products.

The internal surface of the wall may be slanted with an angle such that the upper portion is larger than the lower portion. When a cross section is taken vertically at the reaction chamber, the internal surface of the wall generally resembles the letter "V". In other words, the upper portion has a larger horizontal cross section than that of the lower portion.

A horizontal cross section of the chemical vapour deposition chamber, $A_{ch}$, may be determined by the formula of:

$$A_{ch} = \frac{F_a \cdot M_g}{R \cdot T [\rho_p - \frac{18\mu - U_{s,stoke}}{g \cdot d_p^2}]}.$$

Where $F_a$ is the total forces that exert on the particles, $M_g$ is the molecular mass of fluidized gas, R is the universal gas constant, T is the reaction temperature, $\rho_p$ is the density of particle, $\mu$ is the dynamic viscosity, $U_{s,stoke}$ is the terminal velocity of particles that will be transported out of the FB reactor, $d_p$ is the particle diameter.

As disclosed herein, the protrusions may be configured to take the form of one or more rings. The ring may be discrete rings, each of which is disposed on the internal surface. The rings may also be continuous. In another embodiment, the rings may not be continuous.

The rings together may generally define different gas circulation chambers.

The protrusions together may define pockets of cavities for collecting or accomodating carbon nano-fibers (CNF) produced in the reaction chamber.

The reaction chamber may contain fluidized solid bed material derived from materials from a gasification process running in cooperation or parallel with production of hydrogen gas or splitting of hydrocarbon gas.

As disclosed herein, carbon generated from the fluidized bed reaction chamber may be fed into a gasifier for gasificiation to increase the yield of hydrogen production.

According to the present invention, there is provided a system for production of hydrogen gas, carbon materials and/or carbon monoxide gas, comprising a chamber for gasification, a chamber for combustion and a chamber for chemical vapour deposition (CVD), wherein the gasification chamber and the combustion chamber are connected by a first channel configured to allow materials to travel from the gasification chamber to the combustion chamber, and a second channel configured to allow materials to return from the combustion chamber to the gasification chamber, a third channel configured to allow materials to be fed from the gasification chamber into the chemical vapor deposition chamber and a fourth channel configured to allow materials from the combustion chamber to fed into the chemical vapor deposition chamber, wherein the chemical vapour deposition chamber includes an upwardly extending wall defining a cavity having a lower portion and an upper portion with the upper portion having a volume capacity larger than a volume capacity of the lower portion, and wherein the wall defines an internal surface provided with a plurality of protrusions extending into the cavity for reducing horizontal cross section of the cavity thereat, wherein the the chemical vapor deposition chamber is designed with widening in cross section towards the top.

Preferably, the gasification chamber and the combustion chamber may be configured such that heat from the combustion chamber is transferred to the gasification chamber.

In another embodiment, the system may comprise a fuel source for providing combustion and heating to the combustion chamber.

In another embodiment, the gasification chamber and the CVD chamber may be connected by a third channel for carrying hot synthesized gas from the gasification chamber without cooling to the chemical vapour deposition chamber. The system may comprise means for providing additional heating to the hot synthesized gas within the third channel and before it enters the chemical vapour deposition chamber.

The system may comprise a fourth channel exiting the combustion chamber, where the fourth channel is configured to pass through the CVD chamber such that heat from exhaust gas in the combustion chamber is transferred into the chemical vapour deposition chamber. In one embodiment, the system may comprise a heat exchanger arranged to transfer heat from the gasification chamber and the combustion chamber to the chemical vapour deposition chamber. In a specific embodiment, the heat exchanger may be located between or adjacent the third channel and the fourth channel.

The system and the process run on it is being designed without the need of intermediate cooling.

The CVD chamber includes an upwardly extending wall defining a cavity having a lower portion and an upper portion with the upper portion having a volume capacity larger than a volume capacity of the lower portion, and wherein the wall may be provided with an internal surface having a plurality of protrusions extending into the cavity for reducing horizontal cross section of the cavity thereat.

In another embodiment, the gasification chamber and the CVD chamber are configured to allow synthesized gas to downdrift through heat exchanging channels through the CVD chamber separated from the gasification chamber.

In another embodiment, the reaction chamber may contain fluidized solid bed material derived from materials from the gasification process running in cooperation or parallel with production of hydrogen gas or splitting of hydrocarbon gas.

In another embodiment, carbon generated from the fluidized solid bed material or the reaction chamber may be fed into a gasifier for gasificiation for increasing the yield of hydrogen production.

Further disclosed herein is a method for producing hydrogen, comprising the steps of a) providing a vapour chamber having a bed of fluidized solid bed particles, b) introducing an inflow gas, where at least a part is made of hydrocarbon gas, into the vapour chamber, and c) providing heating to the vapour chamber until hydrogen is produced from the dissociation of said gas. The fluidized solid bed particles may comprise metal catalysts.

Also disclosed herein is a system for producing hydrogen comprising a) a vapour chamber having a bed of fluidized solid particles therein, b) a metal catalyst feeder for feeding metal catalyst and a catalyst support into the vapour or onto the fluidized solid particle bed, c) a gas supply arranged to introduce an inflow gas into the vapour chamber, and d) a heating system arranged to provide heating to the vapour chamber, wherein said inflow gas includes at least a portion of hydrocarbon gas, wherein the system is configured to produce hydrogen from the dissociation of the inflow gas.

The aforementioned catalyst support may comprise, from or be comprised in the bed of fluidized solid bed materials, and is selected from a group including an activated carbon-based material, metal carbide, graphite, diamond, buckminsterfullerene, microcrystalline graphite, glassy carbon, diamond powder, carbon fullerene, carbon nano-fibers and carbon nano-tubes.

As disclosed herein, the thermo-catalytic splitting of hydrocarbon gas is occurring in the vapor chamber (may also be addressed as CVD chamber thereafter) and may be driven by waste heat of an installation or a combination of installations via a heat exchanger or heat pipe. An illustrative example for the foresaid installation which could generate waste heat could be applicable but not limiting in a process like solar/thermal collection, gasification, combustion, hydro-cracking or steam reforming of fossil fuels or combination of installations thereof.

The CVD chamber may be located in tandem configuration or standing above or underneath of an installation or a combination of installations which allow provision of waste heat to drive the thermo-catalytic splitting of hydrocarbon gas. Besides, such a combination between the CVD chamber and the waste heat generator may be inter-communicable, depending on the reaction conditions and environment. In terms of energy efficiency, the production of hydrogen gas is therefore more efficient due to the less energy input.

Contact time and temperature may affect the physical properties of nano-carbon products produced from the system, especially when they are formed as fibers or tubes. The growth rate of carbon nano-tubes may depend upon, among other factors, the hydrocarbon concentration and process temperature. Carbon nano-tubes are characterized by their specific length and diameter distributions as obtained when exposing the supported specific catalysts within a given time window with the hydrocarbon gas source. The hydrogen yield from the dissociation, or cracking, of the hydrocarbon gas may be kept very stable even above 90 vol% in the gas outlet.

Coating the catalyst directly on quartz or sand fluidized solid bed particles may include an integrated thermal or kinetic spraying process so as to allow higher throughput at controlled process parameters.

The basis of a cold spraying process is the gas-dynamic acceleration of particles to supersonic velocities, for instance in the range 300-1200m/sec, and hence high kinetic energies, so that solid-state plastic deformation and fusion occur on impact to produce dense coatings without the feedstock material being significantly heated. This may be achieved using convergent-divergent Laval nozzles, under high pressure (up to 3.5MPa) and/or at high flow rates (up to 90m$^3$/hr) of gases such as helium or nitrogen. The gases may be pre-heated to about 800°C, or just below the melting point of the metal, to increase the velocity. Pre-heating may also aid in particle deformation.

The spraying rates may be 3-5kg/hr and build-up rates may be 250$\mu$m/shot. Feedstock particle sizes may be in the order of 1-50$\mu$m. Cold spraying uses the principle of impact-fusion coating and is particularly effective for the deposition of ductile metals, alloys (Mo, Ni, NiFe, etc.) or polymers, or blends thereof.

Accordingly, cold spraying may be an effective method to achieve high yield in Me catalyst coating on type A and D bed materials in fluidized bed reactor (FBR) processes.

Spraying rates of 3-5 kg/hr Me-catalyst may achieve conversion of up to 100 m$^3$/h CH$_4$, corresponding to approximately 63 kg/h of carbon and 235 m$^3$/h of hydrogen gas at a 90% conversion ratio. In the FBR cracking process residual catalyst may remain in the solid bed, to be recycled by at least one cyclone. The catalyst spraying rates may be adjusted to lower values by a feedback loop. The feedback may be obtained from an integrated sensor providing information about the hydrogen content after cracking the hydrocarbons.

As disclosed herein, the supplied catalyst may be partially pre-deposited on graphitic carriers, such as nano- or micro-carboneous particles or fibers. One advantage of the "carried catalyst" is a separation between the Me-particles and prevention of agglomerations from the powder feeder, through the nozzle and onto the solid bed. Otherwise Me-particles may stick easily together influencing the fluidization parameters and characteristics of the solid bed. The perfect growth process requires nano-structured metallic seed centers. Therefore, a fine tuning of the circulation velocity, the content of nano-carbons and the spray flux may be performed within the above mentioned feedback loop.

Appropriate carbide building metals and combinations thereof may be used as a catalyst base. The metals and their combinations may be prepared by various chemical preparation methods like precipitation or sol-gel process. Furthermore they may be dried and reduced to prevent process contaminations from oxygen or water formations.

Plasma arc spraying may be employed to coat Me-catalyst particles on the FBR solid beds. An electric arc ionizes and heats up a gas which melts the metal catalyst and propels it to the solid substrate. The electric arc is confined to the space between an anode and a cathode flushed by the operating gas. As sufficient voltage is applied between the two electrodes separated only by a small gap, electrons are extracted from the cathode and accelerate towards the anode. If gas is blown through the arc, gas atoms collide with electrons causing more electrons to be emitted and traveling towards the anode. Meanwhile, the nuclei are partially stripped of their electrons and positively charged ions move to the cathode. So the gas in the gap is ionized, becomes electrically conductive as plasma and is ejected through an orifice in the anode as a plasma beam. Inside the plasma temperatures can exceed 9,000°C. The ionized gas begins to recombine after passing the orifice and begins to cool down. By using plasma spraying the catalyst may be supplied in powder form, suspension or as a wire. When the gas jet reaches 10,000K, all materials are molten and propelled towards the fluidized bed. After impingement they solidify and form a deposit. This method may be useful for bed substrates showing poor or no chemical wetting behavior for metal catalysts. Wetting in small diameter droplet form may be useful for hydrocarbon cracking applications. No further drying step of thermal sprayed metals may be necessary, as the temperatures may be high enough to evaporate most, or all, of the adsorbed water. The amount of additionally supplied catalyst may be controlled by a feedback loop driven by a gas sensor measuring the partial pressures of hydrogen and/or hydrocarbons in the reaction chamber. This partially self-supporting catalytic cracking process should be clearly distinguished from autocatalytic or pyrolytic processes at high temperature like the Kvaerner Process, which starts and works without catalysts.

In the aforementioned FBR process, bed particles may be loaded with catalyst to grow nano-carbons and produce hydrogen and then separated from the carbons by a cyclone to be reused again as bed particles. Incomplete separated material may be reapplied to the bed material without significant replenishment of catalyst material. After several cycles the active catalyst concentration will be reduced and therefore may require an increase in replenishment of catalyst. The waste heat from the spraying process may be fed by a heat exchanger to the incoming feed gas for pre-heating, and so optimize the energy consumption of the overall process.

In a first application, when using only produced nano-carbons as bed materials a single cyclone or even simple filter arrangements may be sufficient for separating produced nano-carbons from the hydrogen-rich product gas. An appropriate fraction of nano-carbons may be replenished as a bed material by a feeder.

In a second application, when additional quartz or sand particles are used in the bed, a double cyclone arrangement may be incorporated into the process. The first cyclone separates the carbons, such as carbon nano-tubes or -fibers from the bed material (quartz or sand particles). Quartz or sand particles are then replenished into the solid bed of the FBR using a feeder. The second cyclone may be used to separate the carbon products from the mainly hydrogen gas as described in the first application.

Heating may include heating the vapour chamber to a temperature such that hydrogen of more than 60% in volume is produced in the vapour chamber. The heating required to effect splitting of hydrocarbon splitting may be provided by waste heat installations like solar/thermal collection, gasification, combustion, hydro-cracking or steam reforming of fossil fuels or combination thereof.

A metal catalyst and the catalyst support may form a supported metal catalyst. A method may include a step of spraying the catalyst onto the catalyst support for forming the supported metal catalyst. The spraying may include kinetic or thermal spraying.

On detection of a reduction of hydrogen production, the fluidized solid bed particles may be replaced with new fluidized solid bed particles.

The fluidized solid bed particles for the vapour reaction chamber may be provided from a gasification process which runs in cooperation with splitting of carbon-hydrogen.

The system may allow removal of carbon from the replaced fluidized solid bed materials, and recycling the replaced fluidized solid bed particles back into the vapour chamber.

The system may be configured to allow extraction of nano-carbons from carbon removed from the replaced fluidized solid bed particles.

The system may be configured to feed carbon materials obtained from the vapour chamber into a gasifier for gasification, for increasing the yield of hydrogen production.

The vapour chamber may be configured to a reactor with fluidized solid bed particles. The solid bed particles may comprise at least one of nano-fibers, quartz and ceramic particles.

The catalyst support may be a polyaniline wrapped carbon nano-fiber and the catalyst may be of the group of carbide forming co-catalysts.

The metal catalyst may comprise a member of the group of carbide forming metals in form of their salts or mixtures thereof.

The metal catalyst from the group of carbide forming metals in the form of their salts or mixtures thereof may be deposited directly onto the catalyst support.

The metal catalyst support may comprise members of the group of metal carbides.

A hydrocarbon gas may comprise any one or a combination of methane, ethane, butane, acetylene or mixtures thereof.

As disclosed herein, gas fed into the vapour chamber may comprise gas synthesized (syn-gas) from the gasification.

The heating may comprise heating the chamber to a temperature such that hydrogen of more than 90% in volume is produced.

The recycling may include passing the used fluidized solid bed particles through a double cyclone assembly.

The system may be configured to separate the replaced fluidized solid bed particles from the carbon in a first cyclone and separating the carbon from a product gas in a second cyclone.

The system may be configured to separate hydrogen produced from the hydrocarbon gas using molecular filtering.

In another embodiment, steam reforming for hydrocarbon gas cleaning after the gasification process becomes superfluous.

BRIEF DESCRIPTION OF DRAWINGS

The disclosure and invention are exemplified by the accompanying drawings that illustrate possible arrangements. Other arrangements of the invention are possible, and consequently the particularity of the accompanying drawings is not to be understood as superseding the generality of the preceding description of the invention.

Figure 1 is a schematic view of the vapour chamber system disclosed herein;
Figure 2 is a schematic view of a catalyst sprayer disclosed herein;
Figure 3 is a schematic view of a catalyst sprayer disclosed herein;
Figures 4A and 4B are SEM images of CNF growth resulting from a method disclosed herein;
Figures 5A and 5B are various views of the transmission of hydrocarbon gas according two embodiments of the present invention;
Figure 6 is a schematic view of the fabrication of a CNF/polymer hybrid according to a further embodiment of the present invention;
Figures 7A to 7C are TEM images of CNF and CNF/polymer hybrid;
Figures 8A to 8C are TEM images of CNF and CNF/polymer hybrid in proximity to a magnet;
Figure 9 is an XRD diffractogram of a CNF and CNF/polymer hybrid; and
Figures 10A to 10C are TEM images of the blending of CNF and CNF/polymer hybrid;
Figure 11 is a schematic diagram illustrating an embodiment of a system for hydrogen production according to the present invention;
Figure 12 illustrates a heat exchanging portion of the system of Figure 11;
Figure 13 illustrates an embodiment of a chemical vapour deposition chamber of the system of Figure 11;
Figure 14 illustrates another embodiment of a chemical vapour chamber of the system of Figure 11; and
Figure 15 is a graph showing the relationship between volume fraction solids and height above distributor in the chamber.

DETAILED DESCRIPTION OF PREFERRED EMBODIMENTS OF THE INVENTION

It is known that Chemical Vapour Deposition (CVD) can be used for small and intermediate volume production of fullerenes and carbon nanotubes. This process is basically based on the reaction:

$$C_nH2_m + (Me + Support) + Energy \rightarrow (C_n \times Me + Support) + mH_2$$

Depending on exposure time, metal type and used support materials, the residual catalyst content in the produced carbon may vary from 1 - 10 wt% at moderate process temperatures between 500 - 900°C. Catalyst supports may react with air and/or water vapour, and may convert partly into hydroxide compounds. Such modified support materials can interfere with a controlled nano-carbon growth process. Hot water vapour from the decomposition of hydroxides reacting with carbon at elevated temperatures can lead to oxidation of nano -fibers and -tubes therefore also emission of carbon dioxide. Thus catalysts must always be kept under dry, inert atmosphere, such as nitrogen or argon, before being used to convert hydrocarbons into carbon and hydrogen. Catalysts and their support should be dried in an inert atmosphere before being used in any hydrocarbon cracking processes to form carbon and hydrogen. Temperatures of 800°C are suitable for removing most absorbed species from catalysts and supports.

Gasification of biomass produces a raw gas mixtures composed of hydrogen ($H_2$), carbon monoxide (CO), carbon dioxide ($CO_2$), water ($H_2O$), methane ($CH_4$) and various light hydrocarbons. These light hydrocarbons would eventually form tar or coke. Tar is a complex mixture of aromatics including a significant fraction of polycyclic aromatic hydrocarbons and its content varies from 5 to 75g/Nm$^3$ for fluidized bed gasifiers. Tar cracking and reforming can increase the gas heating value and the overall efficiency of the biomass thermochemical conversion process. This approach is more desirable than water or oil scrubbing to remove tar, which poses environmental hazards not easily resolvable. Both manufactured catalysts and naturally occurring minerals can promote tar cracking and reforming for use in the gasification process.

When considering the effectiveness and rate of a reaction, transition metal catalyst is the most suitable choice among metals. Such catalyst include cobalt (Co), iron (Fe), nickel (Ni), platinum (Pt), ruthenium (Ru) and rhodium (Rh). Studies have shown that cobalt based catalysts are very effective in terms of tar removal. However, the limitation in using transition metal based catalysts is the severe deactivation of the catalyst. This deactivation occurs mainly when the catalyst is placed immediately after the gasifier where high tar levels cause coking and trace contaminants poison the catalyst. Most commercially available transition metal catalysts display moderate to rapid deactivation due to the build up of surface carbon and sintering effects. This latter phenomenon occurs at high temperatures. When transition metal is deposited on a support, the metallic particles tend to migrate and form larger aggregates, reducing the dispersion and consequently the catalyst activity.

Studies have been conducted to screen a variety of carbon materials which can enhance the yield of hydrogen in the biomass gasification. Particularly, in the presence of activated carbon, hydrocarbon gas like methane decomposing at 850°C can produce effluent gas with an initial hydrogen concentration of 77vol%, with the balance being unconverted methane. The range of carbon-based catalysts is significantly expanded and include activated carbons of different origins or by different activation methods, the group of metal-carbids, a variety of carbon blacks with a wide range of surface areas, microcrystalline graphites, glassy carbon, diamond powder, and nanostructured carbons (i.e., fullerenes and nanotubes). Studies have shown that activated carbons have the highest initial catalytic activity among all the carbon materials tested. The methane decomposition rates over different grades of CB and acetylene black are somewhat lower than that of the AC samples. Although transition metal-based catalysts enjoy a high catalytic activity at moderate temperatures (500-750°C), there remain technical challenges like separation of the carbon product from the metal catalyst. The use of carbon-based catalysts offers certain advantages over metal catalysts due to their availability, durability, and low cost. In contrast to the metal-based catalysts, carbon catalysts are sulfur resistant and can withstand much higher temperatures.

Accordingly, a method of mixing of CNF with metal oxides/metal carbides with optimum thermal conductivity and impose positive effect on catalytic activity is disclosed herein. In the gasifier, the incorporation of CNF with the conventional Olivine used is beneficial because a higher yield of hydrogen liberation in biomass gasification can be attained. Further, the mechanical strength of bed materials is stronger and can withstand a certain extent of bed movement and would only break off from surface at certain minimum size. The feedstock gas to the CVD chamber can also be the raw gas produced in the gasification and it should be methane containing.

In common practise, the $CH_4$ containing syn-gas evolving from the gasification is the difficult to crack. An embodiment of the present invention is concerned with a system with a CVD chamber communicable with the gasifier such that the syn-gas evolved from the gasifier can be fed into the CVD chamber as feedstock gas. As such, higher hydrocarbons and methane gas can be catalytical splitted and CNFs can be grown, leading to a higher yield of hydrogen liberation. This combination can make the steam reforming cleaning step superfluous which would be required in conventional gasification.

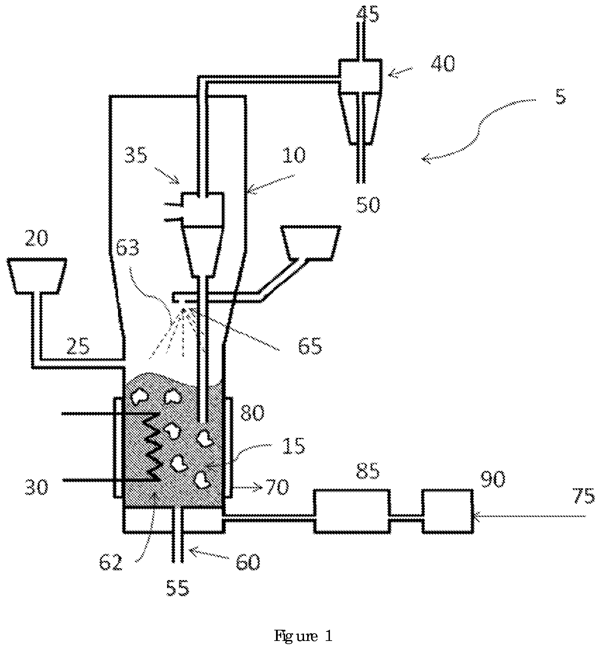

Figure 1 shows an embodiment of a system 5 for producing hydrogen. The system 5 shows a vapour chamber, in this case a fluidized bed reactor 10 having a fluidized solid bed 15 within the reactor. The solid bed is supplied from an external source 20 and fed continuously 25 into the reactor 10. The solid bed material may be quartz, sand or carbon nano-fibers depending on the arrangement of the process, and the feedstock could be fresh materials (graphitic materials, metal oxides, metal carbides, or any materials with optimum thermal conductivity and capable to have good interaction with CNF catalyst loading) or bed materials used in gasification process. The inflow 25 of bed material may be positioned so as to pass into a spray 65 of catalyst material (which can allow CNF to grow) on entering the reactor 10.

The sprayer 65 acts to coat the catalyst particles on the bed material using a process to be described later. The coated catalyst may have any shape and scale of granularity. The quartz or sand beds may be coated by a thermal or kinetic sprayer while being contacted by the process gas in the fluidized bed chamber 15 of the reactor 10 in Figure 1. Alternatively a bed of mostly or purely nano-carbon powders comprising of mainly fibers or tubes, as produced by the process can be used by using a recycling system. This corresponds to a Geldart Type A reactor where particle sizes are between 20 and 100$\mu$m, and the particle densities are typically 1400kg/m$^3$. Prior to the initiation of a bubbling bed phase, beds from these particles will expand by a factor of 2 to 3 at incipient fluidization, due to a decreased bulk density. Hydrogen enriched gas bubbles will emerge from the bed when the catalyst reacts with the feeding hydrocarbon gas.

As illustrated in Figure 1, the spray nozzle 65 is directed into the center of the chamber 1. The lower section of the chamber 10 comprises a supply 75 for the process gas. A gas distributor 62 is applied into a recess on the lower side of the chamber 10. The fluidized bed reactor 5 is then operated as follows. At the start air is removed from the container 10 of the FBR process chamber. The chamber remains empty during the conditioning phase and no material is fed in or sprayed. In this way, any temperature gradient build-up on the reactor walls will be disabled and therefore no condensation or adhesion of the product to the container wall may occur.

The charging is done in a closed installation and during continuous flow of the process gas and the process of conditioning is not interrupted. When thermal stability has been achieved solid bed materials 20 (e.g., quartz sand or nano-carbons) are fed into the process chamber 10 by the charging device 25. With the charging device 25 mounted on the side wall, the solid bed can circulate inside the target region of the Me-catalyst beam 63 produced by the spray nozzle 65. The bed material is gravimetrically weighed into the feeding device and then conveyed into the process chamber to support a continuous process flow at constant process conditions.

The spraying procedure starts after the bed material has been dispensed and no difference between the inflowing and out flowing gas temperatures is detected. At the beginning of the process and during conditioning, the dry particles tend to electrostatically charge up and thus tend to attach to the container wall, so that an appropriate particle remover should be actuated.

The heat/thermal energy required for the catalytical hydrocarbon gas splitting is provided via heat exchanger 30. Heat could be generated by electricity, combustion of CVD chamber off gas or supplied by the waste heat of a process like solar/thermal collection, gasification, combustion, hydrocracking or steam reforming of fossil fuels or combination of installations thereof.

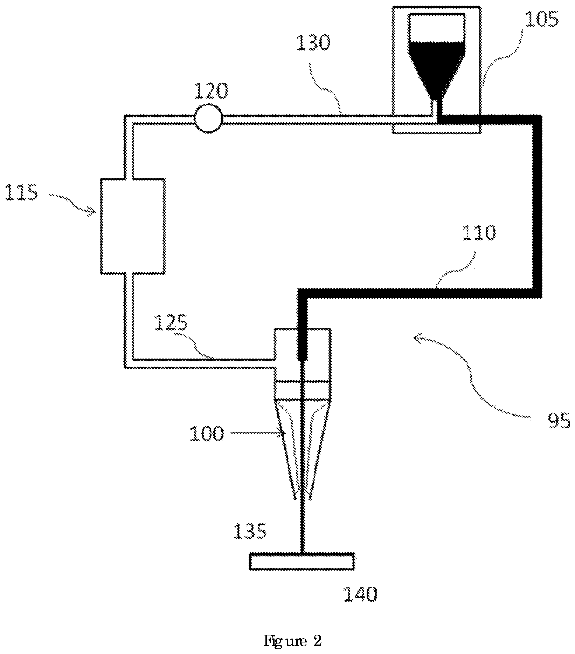

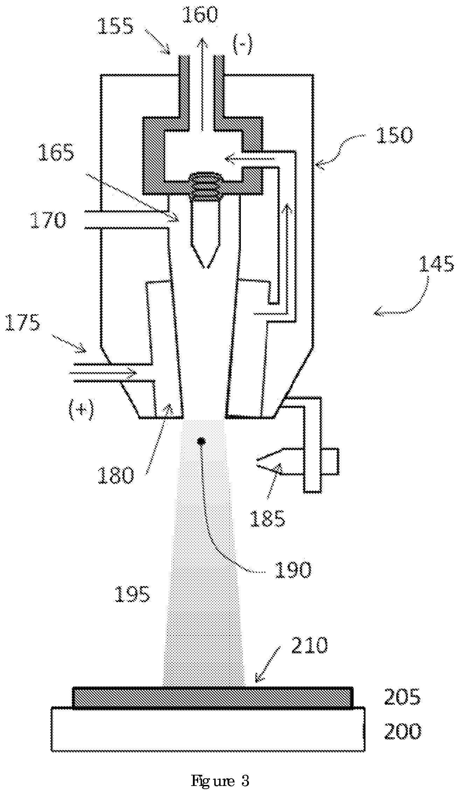

Under optimized reaction condition in the system 5, the hydrocarbon gas is delivered into the fluidized bed via the gas distributor 62, the hydrocarbon feedstock gas can be fresh material or the syngas evolved from a gasifier. The reaction proceeds within the fluidized bed reactor 10 as long as the gas from the gas distributor 62 is continuously feeding in and the raw product is still under the required density limit inside a first cyclonic device 35. The required density of the raw product could be adjusted and optimized by controlling the rotating speed in the first cyclonic device 35. When the density of the raw product is higher than the limit, it would precipitate back to the fluidized solid bed 15 and undergo the circulation again. When the density of raw product is smaller inside the first cyclonic device 35, particulates will be removed from the first cyclonic device 35 and the particulates will be fed into a second cyclonic device 40. The raw products in the second cyclonic device 40 will then be subjected to a secondary separation with a similar working mechanism in the first cyclonic device 35. Hydrogen gas and other off gases from the hydrocarbon gas splitting will exit via channel 45 while the CNF and the bed materials will altogether exit via channel 50. In an embodiment, part of the aforementioned CNF and bed materials can be fed into the gasifier so that a higher yield of hydrogen liberation can be accomplished. In further embodiment, the aforementioned CNF and bed materials can be fed into the CVD chamber for further hydrocarbon gas splitting. Various spraying devices 65 may be used in the system of Figure 1, two of which are shown in Figures 2 and 3. The first, a cold spraying device 95 accelerates particles to super-sonic speeds to achieve plastic deformation of the catalyst about the particles. The alternative shown in Figure 3 involves an electric arc whereby an arc gas 170 is passed between a cathode 165 and an anode 180 to produce a plasma stream 190, into which a supply of powder and carrier gas 185 are mixed, projecting the gas/powder mix 195, 210 onto a substrate 200 to create the desired coating 205.

Illustrated Examples

For the growth of CNF, aggressive acid treatment for the purification of transition element towards the end of CVD is to be avoided. Therefore, a co-catalyst system, which is water-soluble, may be implemented. (1) $Fe(NO_3)_3$ or $Ni(NO_3)_2$, (2) $Mo_7(NH_4)_6O_{24}.6H_2O$ may be used.

The use of a molybdenum containing compound, which is a crucial element for the activation of the $Fe(NO_3)_3$ or $Ni(NO_3)_2$ during catalyst activation with nitrogen, also assists in lowering the activation energy of the threshold for CNF growth. These catalysts typically work only when loaded on a support, which may be a carbon nano-fiber, before they start the catalytically splitting of hydrocarbon gas, i.e. methane gas into carboneous fibers. Indeed, the catalyst support can also be MgO or sand particles which can provide larger surface area for reaction. To replace the commonly used MgO, carbon nano-fibers are chosen for seeding of the above said catalysts. As the growth of carbon nano-fibers induces also the catalytic splitting of methane gas it is also beneficial to use carbon nano-fibers as catalyst support due to their well-known high electron accepting ability.

As shown below in Table 1, sample 1a approximately uses 3.17g of catalyst salt (1) and 6.975g of the catalyst salt (2) in 100ml of de-ionized water for 3 hr at room temperature at vigorous stirring. Afterwards, 0.5g of catalyst support, in this case CNF, is added to the above solution for further 5 hr of stirring at room temperature. After vigorous stirring, the resultant mixture becomes homogenous black and the solution is separated by suction filtration via filter. The filtrate was repeatedly washed with de-ionized water and the filtrate was then stored in an oven at 60°C for 12 hr for drying. After the solid is dried, it will be subject to a grinding machine and fine powder will be collected and the spraying process will begin, as shown in Figure 2 for example.

To initiate the catalytic hydrocarbon gas splitting process, oxygen in the reactor has to be removed. One method would be to first purging of $N_2$ to the reaction chamber for 15mins and then rising up the temperature to the reaction temperature, i.e. 850°C. When the temperature is reached, another 15mins of $N_2$ is purged and followed by 15mins of hydrogen gas purging in order to activate the catalyst surface. After equilibrium, the feed gas (methane) will be set at a pressure of 1.5bars with a flow rate 3L/min and the temperature to grow CNF will be set at 850°C.

Different proportions of co-catalysts and the catalyst support were dried and the experimental data is summarized below; the recipe of the catalyst, catalyst support in different ratio and the corresponding yields are described as follows.

Table 1. Different proportion between catalysts and CNF (catalyst support)

| run | catalyst 1 (g) | catalyst 2 [c] (g) | CNF (g) | input (g) | output (g) | yield (%) | relative catalyst [d] (wt%) |
|---|---|---|---|---|---|---|---|
| 1a | 3.17 [a] | 6.33 | 0.5 | 10 | 19.8 | 198 | 48 |
| 1b | 4.75 [a] | 4.75 | 0.5 | 10 | 24.8 | 248 | 38.3 |
| 1c | 6.33 [a] | 3.17 | 0.5 | 10 | 35 | 350 | 27.1 |
| 2a | 3 [a] | 6 | 1 | 10 | 19.2 | 192 | 46.9 |
| 2b | 4.5 [a] | 4.5 | 1 | 10 | 19.6 | 198 | 45.9 |
| 2c | 6 [a] | 3 | 1 | 10 | 35.2 | 352 | 25.6 |
| 3a | 2.65 [a] | 5.3 | 2 | 10 | 19.6 | 196 | 40.8 |
| 3b | 4 [a] | 4 | 2 | 10 | 26.1 | 261 | 30.7 |
| 3c | 5.3 [a] | 2.65 | 2 | 10 | 32 | 320 | 25 |
| 4 | 6.33 [b] | 3.17 | 0.5 | 10 | 45.5 | 455 | 20.9 |
| 5 | 6 [b] | 3 | 1 | 10 | 39.6 | 396 | 22.7 |

[a] $Fe(NO_3)_3$ used as catalyst 1;

[b] $Ni(NO_3)_2$ used as catalyst 1;

[c] $Mo_7(NH_4)_6O_{24}.6H_2O$ used as catalyst 2;

[d] Amount of catalyst at the end of CVD growth

In the above illustrated lab-scale example, although the deposition of the catalyst on CNF was done by mechanical mixing, the production can be executed in a closed-environment by using either the above proposed two spraying methods for larger scale production of a fluidized bed reactor. The pre-mixed co-catalysts solution can be placed in the spray coater 165, for example Figure 3, while the catalyst support (CNF) will be introduced into the bed reactor via the bed feeder 25 for catalyst deposition. After the catalyst deposited on the CNF, the further growth of CNF can be initiated. This outlined process provides a closed cycle production method to produce hydrogen gas and mechanically cleaned nano-carbons like fibers or tubes by just internally feeding of bed material, catalyst, catalyst support, hydrocarbons.

Alternatively, Figure 2 shows a cold spraying process 95 using the gas-dynamic acceleration of particles to supersonic velocities, so that solid-state plastic deformation and fusion occur on impact on a substrate 135 to produce dense coatings 140 without the feedstock material being significantly heated. This may be achieved using convergent-divergent Laval nozzles 100. The gases 120 may be pre-heated 115 to about 800°C, or just below the melting point of the metal, to increase the velocity.

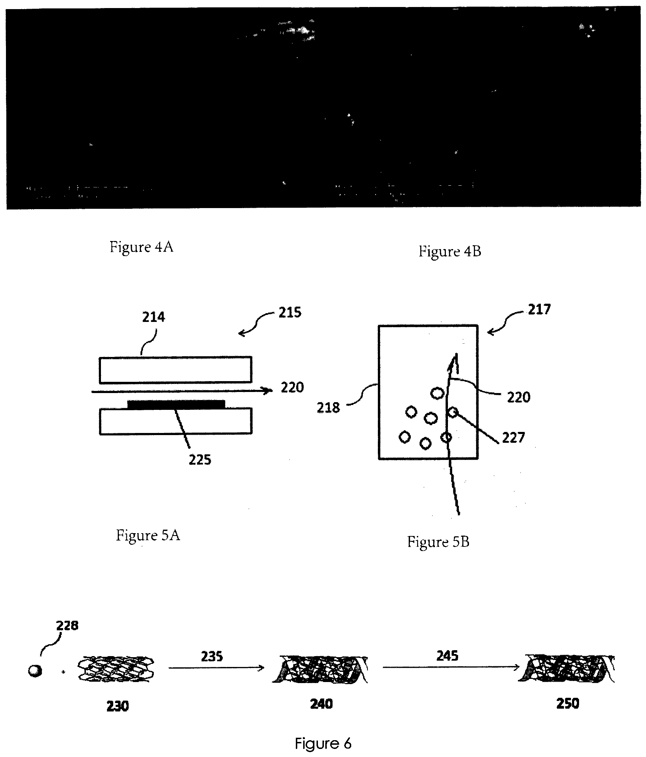

As shown in Figure 5A, in conventional CVD chamber 215 any hydrocarbon like acetylene gas 220 will pass over the catalyst 225, which is placed inside the temperature elevated chamber 214. Acetylene gas 220 however can only interact with that catalyst on the surface thus the production is yield optimized due to the limiting surface area. In contrast the fluidized bed reactor shown in Figure 5B, the metal catalyst support 227 can be fluidized in reactor 217 due to continuous supply of acetylene/carrier gas 220. Therefore, the production of yield will be significant higher due to the increase exposure of surface area.

It is known that the aggregation of nano-materials is a serious issue as their attractive force is too strong without separation. Thus, engineers are required to well disperse the catalyst for CVD by using a very low of concentration of catalyst or nano-patterning by polymer lithography to produce uniform catalyst particles. However these kinds of preparations are limited by the low concentration of metal catalyst and can be only done in lab scale. In addition, as mentioned earlier there exists the problem of catalyst deactivation through encapsulation by carbon. Therefore, another mechanism for effective use of catalyst and the deposition of catalyst in catalyst support is proposed in the following. The invention aims to enhance the efficiency of the seeding of catalyst on CNF for CVD, and at the same time, enhance the production yield by using smaller amount of catalyst. This can be realized by better interaction of catalyst and CNF, so even smaller amount of metallic catalyst can be used and a better dispersed and homogenous of deposition could be produced. Due to the effective increase of catalytic surface area, the production yield could be increased accordingly.

In a second example and in order to enhance the seeding of catalyst to the catalyst support, pre-treatment of the carbon nano-fibers can be done. As shown in Figure 6, this could be achieved by a one-step polymerization 235 on carbon nano-fibers 230, so that the resulting hybrids 250 are more ready to accept the catalyst, i.e. y-$Fe_2O_3$ in nano-scale and eventually the effective surface area can be greatly enhanced. It could be understood as illustrated example in Figure 6 and merely for demonstration as the use of catalyst support is not limited. Alternatively, any other graphitic materials with high surface area could also be employed.

In a third example, the use of $\gamma$-$Fe_2O_3$ could be replaced by other transition metal containing materials like Olivine, Ilmenite or other catalytic materials which can grow CNF. Besides of chemical treatment, incorporation of catalyst to the fluidized bed materials could also be realized by physical means such as deposition, i.e. system depicted in Figure 2 and Figure 3.

Chemical synthesis

A 100 ml round-bottom flask equipped with a septum and a magnetic stirrer bar was added 0.5 g of pristine CNF and 40ml of 1.18 M of HCl solution. The mixture is ultrasonicated for 1h. The resulting mixtures are then cooled to 0 to 5°C by ice water and 0.056 g (0.0125 M) of aniline was injected. 0.136 g of APS dissolved in 8ml of 1.18 M aqueous hydrochloric acid was prepared, which is added to the mixture via a dropping funnel drop wise. The polymerization was performed at 0°C for 2 h with continuous stirring. The polymer-MWNTs hybrids were collected by filtration using a 0.22 mm pore-sized polycarbonate membrane and washed thoroughly with de-ionized water until the solution became clear. The products were overnight in vacuum oven at 40°C. Green powder of polyaniline(ES)-wrapped MWNT 240 was isolated in 91.5 % yield (0.5 g). IR (thin film), v (cm-1): 796.6 (aromatic C-H out-of-plane bending), 1302.2 (C-N stretching of the secondary amine), 1493.4, 1584.2 (C=C stretching).

0.5 g of 240 was added into 250 ml of ammonium hydroxide (vol ~ 30%). The solution was then stirred for 2 h. the products were collected by filtration using a 0.22 mm pore-sized polycarbonate membrane and were washed thoroughly with de-ionized water. The hybrids were dried overnight in vacuum oven at 40°C. Blue powder of polyaniline (EB)-wrapped MWNT hybrid 250 was isolated in 98.1% yield (0.49g).

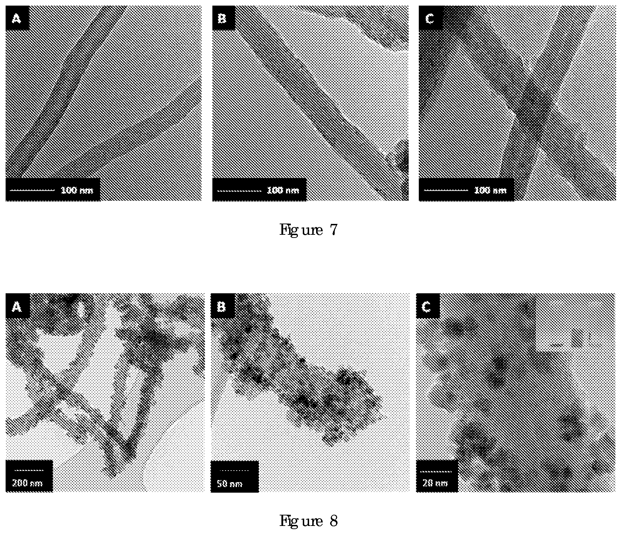

To check whether wrapping of polymer chains around the MWNTs is successful, 0.1 wt% of hybrids in Tetrahydrofuran (THF) was added and the mixtures were then ultrasonicated for 1 h. After 1 day of sedimentation, the homogenous solution were extracted immediately (diluted with THF, v/v 1:1) and obvious supernatants were removed. The supernatant were used to do the transmission electron microscope (TEM) analysis, and their pictures are shown in Figure 7. In Figure 7A, individual CNFs are found in the supernatant, while in contrast, a thin layer of amorphous polymers is found on the MWNT surface, as shown in Figure 7B and 7C which is absent on the MWNT peripheries.

To estimate the amount of polymer coated on the CNF, TGA analysis was done on the hybrid 250 by using a Perkin Elmer TGA 7 under nitrogen at a heating rate of 10°C/min. Apparently, CNF is very thermally stable, losing negligible of their weights when heated to 800°C. On the other hand, the hybrid starts to degrade at round 200°C. This is easy to understand because the polymer chains generally show low resistance to thermolysis. Comparing the weight loss in the thermograms, it can be estimated that there is approximately 8 wt% of polymer within the hybrids.

As soluble polyaniline-CNF hybrid is readily synthesized, and it possesses high electron conjugation within the polymer moieties, homogeneous wrapping over the nano-fiber by the polymer provides a breeding ground of the CNF growth catalyst, i.e. magnetic nano-particles such as ($\gamma$-$Fe_2O_3$). Although the adsorption of nano-particles onto MWNTs is often reported to be failure because of the extremely high curvature, which hinders the formation of dense coatings, however, our technique overcomes this difficulty; since the interactions responsible for the assembly are mainly electrostatic and the results shown as following are promising.

Synthesis of $\gamma$-$Fe_2O_3$

1.99 g of $FeCl_2$~$4H_2O$ (10.0mmol) and 3.25g of $FeCl_3$ (20.0mmol) were dissolved, respectively, in 10 and 20 ml of water. The two solutions were combined and dropped into 200ml of 0.6M of aqueous ammonia solution in 20min under vigorous stirring. The pH value of the solution was at 11 to 12. The resulting products were separated by centrifugation and washed with distilled water three times and then dried in air to a constant weight in a vacuum oven.

Seeding of $\gamma$-$Fe_2O_3$ on CNF

0.01 g of $\gamma$-$Fe_2O_3$ and 0.1 g of hybrid 250 were mixed in 100ml THF under stirring. The resulting solution was ultrasonicated for 3h. Purification of the hybrid was achieved by repeatedly washing the crude product with THF and subsequent centrifuging the mixture to remove the supernatant. Dark powder P1c was isolated.

Figure 8 shows the TEM micrographs of the resulting hybrid $\gamma$-Fe$_2$O$_3$-250. The particles are almost spherical in shape with an average diameter of ~10nm. A uniform coating of magnetic particles onto the CNF is achieved, as suggested in the TEM images of Figure 8. Long (~3$\mu$m) MWNTs are completely covered with a layer of magnetic nano-particles. The y-Fe$_2$O$_3$ decorated MWNTs are very stable and can be stored at room temperature without special treatment for years. The magnetic response of these magnetic MWNTs was easily and quickly visualized by holding the sample close to a small magnet, as shown in inset of Figure 8C.

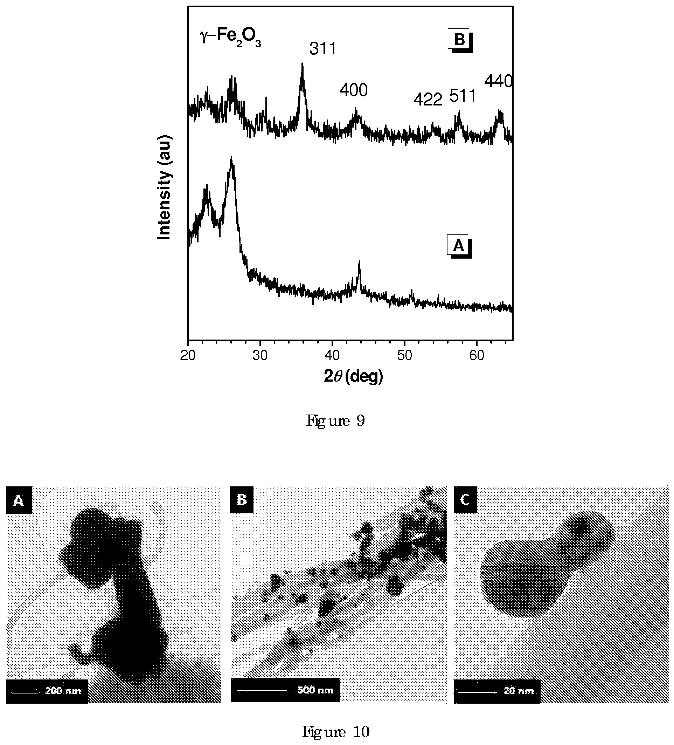

The crystalline nature of the nano-particles is confirmed by X-ray powder diffraction (XRD). Figure 9 shows the XRD patterns of the $\gamma$-Fe$_2$O$_3$ decorated polymer-wrapped-CNF hybrids, as well as the pristine CNF. The XRD patterns shown are similar to those of the $\gamma$-Fe$_2$O$_3$ nano-crystals with spinel structures reported by other groups. The diffraction angles at $2\theta = 30.1°$ (d = 2.966 Å), 35.6° (2.520 Å), 43.4° (2.083 Å), 53.6° (1.708 Å), 57.3° (1.608 Å), and 62.8° (1.478 Å) can be assigned to 220, 311, 400, 422, 511, and 440 planes of the structures of $\gamma$-Fe$_2$O$_3$, respectively. It is known that the diameter of the carbon nano-fiber during growth depends on the size of the catalyst used; therefore, it is beneficial if the catalyst ($\gamma$-Fe$_2$O$_3$) size can be optimized by experiment.

The above illustrated lab-scale pre-treatment of CNF for seeding of catalyst can be further improved. Since the $\gamma$-Fe$_2$O$_3$ is indeed insoluble in THF, the ultrasonication on CNF is still limiting as it has been found that relatively big particles in micrometers would still be present and which are not yet coated and found under TEM. As discussed above, by using the spraying method, iron particles can be homogenously coated on CNF surface in high yield. In fact, by optimizing the gas flow rate and gas temperature, the opening and the feeding rate of the Laval Nozzle, the size of $\gamma$-Fe$_2$O$_3$ deposited can be controlled and eventually the diameter of the CNF growth can also be controlled.

To compare the results in the absence of polymer to deposit the $\gamma$-Fe$_2$O$_3$ on carbon nano-fibers, studies have been performed to mimic the same experiment by replacing pristine carbon nano-fibers. The deposition failed to complete, as shown in the following TEM pictures. Although discrete of nano-fibers are decorated with nano $\gamma$-Fe$_2$O$_3$, big blocks of $\gamma$-Fe$_2$O$_3$ are also discovered, as shown in Figure 10A.

As mentioned earlier, the lab-scale reactor by using the co-catalysts system, it can be assumed that the blending of the carbon nano-fibers with the 2 co-catalysts is similarly behaved to that of the $\gamma$-Fe$_2$O$_3$. Without the assistance of polymer, the decoration of catalyst is not desirable, and big blocks of catalysts are actually buried within the composites. As the effectiveness in the seeding of co-catalysts on CNF surface is limiting, the growing of CNF growing is not efficient. This explains why the yield of production is more or less the same in Table 1 (run 1-3), because the catalyst supports serve only limiting effect in catalyst segregation. Furthermore, the reduction of catalyst usage (from run 1-3) imposes no significant changes in the production. Indeed, a minimum amount of catalyst may be used. According to conventional CVD method, less than 10wt% catalyst by comparison with the catalyst support is already sufficient for CNF growing. Referring to Table 1 above, the minimum yield of production is approximately 200% while the maximum yield is close to 350%, when the catalyst residue will only be 5% and 2.86% respectively at the end of CVD growth. At the end of production, the tiny amount of catalyst residue becomes less prominent, and the catalyst removal would not be required.

During the studies leading to the present invention, it was found that there were challenges concerning different densities and sizes of particles inside the chemical vapour deposition (CVD) reaction chamber. Different sized fluidized bed (FB) materials are subjected to different gas turbulences under the same gas velocity inflow. Materials with lower density are usually found at the top of the chamber. Since the materials with higher density usually retain more heat in the fluidized process they will usually be found near the bottom of the chamber. Accordingly, the speed of the gasflow may be lower towards the top of the chamber. This is not desired in hydrogen gas formation.

During hydrocarbon gas splitting in the reaction chamber according to the present invention, carbon nanofibers (CNF) will grow on catalysts and their supports or catalysts deposited directly on FB materials. As mentioned, the CNF-catalysts complexes with different density during growth will be subjected to fluidization gas turbulences while the lightest will tend to escape to the very top of the chamber. If the flow speed was kept low enough to prevent such particles from exiting in the off-gas stream, the FB materials cannot be fluidized throughout the chamber. In addition, the temperature on the top of the reaction chamber would be too low for continued self-supported carbon growth of the CNF, as lower temperature would favor char/tar formation on the particles surface instead, bringing the CNF growth to a stop. As such, CNT with poor uniform density and diameters will be generated towards the end of the reaction, in addition to the low yield of CNT and Hydrogen gas.

Most commonly used biogas can be generated on sites where structural organic materials or sediments are in the vicinity. During gasification, a certain amount of heat is required within a certain temperature regime. Meanwhile, the thermal energy required for the hydrocarbon splitting coincidentally falls within the same temperature range. Accordingly, one embodiment of the present invention takes advantage of the heating generated from the gasification for use in hydrogen splitting chamber by way of a dual fluidized bed gasification (DFBG), so that extra input energy is no longer required, as a result, the overall engegy efficiency of the process is enhanced.

Such an arrangement further opens up the opportunity to use a fluidized bed material carrying the heat from a combustion chamber to the oxygen free gasification chamber by chemically capturing CO$_2$ in a form to allow recycling by using CaO to form CaCO$_3$. This capturing technique of CO$_2$ from the synthesis gas therefore also allows direct feeding of hot synthesis gas into the CVD splitting chamber, saving heating energy and additional energy intensive $CO_2$ cleaning process steps. By keeping the synthesis gas at all times high enough for CVD splitting and above condensation temperatures of tars formed during the gasification, these hydrocarbons can contribute to additional hydrogen yield in the splitting process, as they usually decompose prior to the methane.

However, in such an embodiment the ashes from the gasification would also be channeled through the CVD chamber. Accordingly, the chamber design allows the elimination of fine nano Carbon recycling between the off-gas filtering and the reaction chamber. Therefore the CVD reaction chamber is accordingly modified in order to address this problem. In the present invention, the CVD chamber is designed in a "V"-shape phasing of the chamber's cross section over its vertical axis, allowing reduced gas flow speed at its top, slow enough to provide residence time to any carbon particles but fast enough to carry out the ashes from the CVD chamber. In combination with a heat replenishment for the CVD chamber securing the highest temperatures at the top section of it, the nano carbon retained in the upper section will continue to grow up to densities, where it eventually will fall back into a lower cross section of the "V"-shaped reactor chamber by gravity, from where it may be harvested.

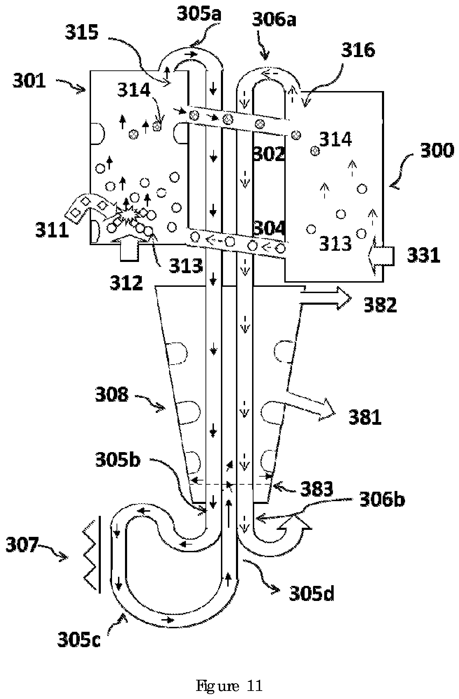

The following describes such a system for hydrogen production with reference to Figures 11-15 in greater details. The system seeks to delivers CNT with more uniform density and higher yield of hydrogen in an energy efficient manner.

The following notations and numerals are used in Figures 11-16.

301. Gasifier
    311. The feedstock of biomass for gasification
    312. $H_2O$ Steam + Biogas from ADOS
    313. $CO_2$ free FB materials
    314. $CO_2$ fixed FB materials
    315. $CO_2$ free Syn Gas
    316. $CO_2$ rich Flue Gas
302. Pipe from gasifier to combustor
303. Combustor
    331. External fuel for combustion
304. Pipe from combustor to gasifier
    305a-305d. Pipe from gasifier to CVD splitting chamber
    306a-306b. Exhaust Pipe from combustor for Heat recovery into the CVD splitting chamber
307. Auxiliary heating units
308. $CH_4$ CCVD splitting chamber
    381. CNF-catalyst complexes
    381a. catalyst for CNF growth
    381b catalyst with CNT growth
    381c detached CNT from 381b
    381d further growth of CNT on 381c
    381e further frowth of CNT on 381 d
    382. Hydrogen gas
    383. grate
309. Heat exchanger

Referring to Figure 11, there is provided a system allowing a gasification process. The gasification process is occurred inside a dual fluidized bed reactor which is composed of a gasifier 301 and a combustor 303. The gasifier 301 and the combustor 303 are interconnected via channels or loops 302 and 304, allowing circulation of fludized bed (FB) materials 313. The FB materials 313 serve three purposes, namely (i) fluidization, (ii) heat supply and (iii) $CO_2$ fixation. Biomass 311 is input into the gasifier 301 and subject to gasification. The process will happen at 900 °C and the required thermal energy/heat will be provided by the FB materials 313 when reacting with the $CO_2$ evolved from the gasification. After the $CO_2$ fixation, FB materials will form as 314, which may be in carbonate form of the FB materials. The FB materials may be but not limited to calcium oxide (CaO) and calcium carbonate ($CaCO_3$). The syngas with $CO_2$ removal in the form 15 will be conducted away via pipe 5a.

The FB materials 314 will then be transported away via pipe 302 to the combustor 303 for regeneration. The regeneration will occur at 900°C, and heating of the combustor 303 may be assisted by using external fuel combustion including hydrogen, fossil fuels, solar energy or waste heat from installations. In the regeneration, $CO_2$ will be given from 314 and will be conducted away via pipe 306a while the reduced FB materials 313 will be reformed again. The reformed 313 will then be looped back to gasifier for another cycle of reaction.

In embodiment, the hydrogen may be produced in the CVD chamber from organics by upgrading the biogas.

The biogas may be from diversified processes like gasification or Anaerobic Digestion of Organic Slurry (ADOS). Since one requirmment of the biogas as a feedstock to the CVD is that is dry and largely free of $CO_2$ content, the biogas evolved from ADOS can also be channeled through to the adjacent DFBG, where the steam content will contribute to the partial reforming and the $CO_2$ can be removed by the chemical looping process executed by the bed material, as shown in Figure 11.

In order to make use of the heat regime of the synthesis gas in the gasifer 301 as well as the waste heat from the combustion heating for the gasification, a counter-stream heat feedback mechanism for heat exchanging is used. Both gases 315 and 316 with very high thermal energy after leaving chambers 301 and 303 respectively will be guided through exhaust gas heat recovery heat-exchangers carrying the heat into the chamber 308 from top to bottom, where hydrocarbon gas splitting in the CVD splitting chamber occurs. In the case of insufficient heat at the bottom end of heat-exchanger pipe 305, auxiliary units 307 for heating is provided for supplying furhter heat before the gas enters into the chamber 308.

Before discharging gas 316 into atmosphere or subject to further post-treatment process, gas 316 passes through the pipe 361 and subsequently into chamber 308. The high thermal energy possessed by gas 16 will be contributed to the hydrovcarbon gas splitting in chamber 308. After that, gas 316 will eventually be discharged to atmospheric or may be used for further reaction like Boudouard reaction. Such Boudouard reaction allows reaction with the CNFs 381 produced by the catalytic splitting in the chamber 308 and may be desirous to split $CO_2$ into additional CO yield from the overall installation for either increasing total hydrogen output via a water shift add-on reaction or for synthetic fuel fabrication from the available $H_2$ and CO volumes, whichever may deem more desirable on a particular site.

Catalyst for the hydrocarbon gases splitting will be placed on grate 383 within the chamber. The splitting will begin with the inflow of gas from 315 cleaned from $CO_2$ to the chamber 308. The use of catalyst and the FB materials within the chamber 308 have been explained above. Studies hae shown that the use of catalyst with particle size ranges from 10-50$\mu$m, which is untypical and challenging for fluidized bed system, is advantegeous. These particle sizes belong to the group C materials according to the Geldart diagram. Group C materials are found to be extremely fine and consequently the most cohesive particles, these particles are found to fluidize under very difficult to achieve conditions unless very strong agitation force ($F_a$) is applied to the system. These forces include the weight of particle, the contact force and the Van der Waal's force by neighboring particle, the up thrust and drag force by the fluidization gas. In order to exert a fluidization effect inside chamber, there is a minimum velocity ($U_L$) of the fluidization gas and it is characterized by the formula:

$$U_L = \frac{\mu}{\rho_g d_{sv}} \left[ \sqrt{33.7^2 + 0.0408\, Ar} - 33.7 \right] \qquad (1)$$

$$Ar = \frac{\rho_g d_{sv}^3 (\rho_p - \rho_g) g}{\mu^2} \qquad (2)$$

where $\mu$ is the dynamic viscosity, $\rho_g$ is the density of gas, $d_{sv}$ is the particle diameter based on surface/volume $d_{SV} \approx$ 0,87 and $d_P$ is the particle diameter. From the above equations, it is to be understood that the fluidization depends on the physical size, density of the FB materials (herewith the catalysts). For those larger and heavier particles, a stronger agitation force exerted by the fluidization gas is required and it is governed by the variable $\rho_g$.

During fluidization, when particle's velocity reaches its terminal velocity $U_{s,stoke}$, particle will be transported out of the FB reactor pneumatically, and this process is called elutriation. However for those particles less than the value of $U_{s,stoke}$, it will be remained within the FB reactor and undergo further catalytic reactor. The calculation of $U_{s,stoke}$ is as follow:

$$U_{s,stoke} = \frac{(\rho_p - \rho_g) \cdot g \cdot d_p^2}{18\mu} \qquad (3)$$

where $\rho_p$ is the density of the particle, $\rho_g$ is the density of gas, $d_p$ is the particles size of particle, and $\mu$ the dynamic viscosity. Since the fluidization is under high temperature and so the whole process could be assumed at isothermal. The gas flow is treated as compressible as local gas pressure and density might be variable. So the gas phase density ($\rho_g$) on the above could be rewrite as follow:

$$\rho_g = \frac{F_a \cdot M_g}{A_{ch} \cdot R \cdot T} \qquad (4)$$

where $F_a$ is the total forces that exert on the particles, $M_g$ is the molecular mass of fluidized gas, R is the universal gas constant, A is the cross section area of the reaction chamber and T is the reaction temperature.

In order to appreciate the present invention, a classical chamber with straight or vertical wall is to be considered. When particles reach its $U_{s,stoke}$, it will be conducted away to the cyclone, the function and catalytic activity of catalyst will be ceased. Under such a strong gas velocity environment, fine particles with low density may detach from the coarse and eventually being elutriated away. Such fine particles maybe the CNF detached from the catalyst or the small size of catalyst in the FB. So there is high possibility that materials are elutriated away before catalytic activities are fully utilized. Indeed, this possibility is confirmed by our empirical experiment which shows that a diversified of CNF/catalyst complexes are formed at the end of reaction and the mean diameter of CNF/catalyst complexes are generally smaller and in addition the lower concentration of Hydrogen. Due to the catalysts/CNF complexes cannot sustain a longer retention time inside chamber, so the catalytic activity and the yield of CNF and hydrogen is affected. In short, the yield and extend of reaction are limited by the value Of $U_{s,stoke}$.

The present invention addresses this problem by allowing particles with different densities enjoy a longer retention time inside the chamber under high gas velocity. The reaction chamber 308 is designed with with widening in cross section towards the top, a V-shape design with lateral internal contractions is designed for multiple speed bed circulation to compensate for particle density differences. The cross-section of the splitting chambers decreases along the height and its internal cross-section may further be reduced by internal reducing rings (with rising diameters). "Belly-openings" between the rings are located to collect synthesized CNFs. In the embodiments shown in the figures, the ring or the rings are configured to be continuous, meaning the there is no interruption along the length of the ring(s). However, in alterantive embodiments the ring(s) may not be continuous in that the ring(s) may have interruptions. Regardless of whether the ring or rings are continuous or not, the purpose of them is to provide pocket-like regions or pockets of cavities for enhacing circulation and reaction of contents in the reaction chamber, and/or collection or depostiion of carbon nano-fibers produced in the reaction chamber. From equation (4), It is to be understood that the gas phase density will be lower by its widening cross section area. As the value of $\rho_g$ is lower, the value of $U_{s,stoke}$ will become higher correspondingly. As such, the value of $U_{s,stoke}$ will increase bottom up with wider cross section. Thus, for those materials at lower altitude with floating velocity already exceed $U_{s,stoke}$ can enjoy a longer retention time when they reach a higher altitude. As such, a backloop of solids can be realized inside one of a section of chambers. Accordingly, the chamber is designed into a cascade of sections at full height, so the countercurrent of solid and gas interactions could be improved by having a longer looping time. Therefore, the catalytic activity can be longer and the yield of hydrogen and CNFs will eventually become higher. By consideration of formula (3) and (4), the cross section of the chamber design would become:

$$A_{ch} = \frac{F_a \cdot M_g}{R \cdot T [\rho_p - \frac{18\mu \cdot U_{s,stoke}}{g \cdot d_p^2}]} \qquad (5)$$

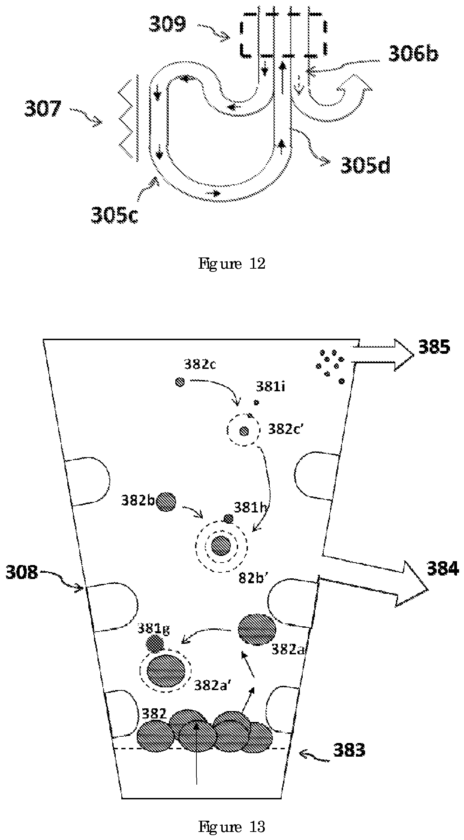

In one embodiment, catalysts with different densities will rise up to different levels in height under reactant gas flow, as shown in Figure 13. Catalysts 382a, 382b and 382c are catalyst with different densities while 382c is the lightest and 382a is the highest. For 382c with light density, it rises to the highest level. In classical FB reactor, 382c will be transported away via 385 due to its light density in high gas velocity and perhaps could not carry out any reactant gas splitting. However, in this V-shaped chamber design, the gas pressure at the top is lower due to its widen opening and thus it could retain a longer retention time. 382c could further split the hydrocarbon gas and CNF could grow further, as shown in 382c'. Meanwhile, for those finest CNF 381i will be detached from 382c' and elutriated away via 385. Similarly for 382b, the further growing of CNF would give 382b' and fine CNF will be detached from its surface and exit via 385. For 382c' keeps on splitting, its density will become higher and eventually falls to a lower altitude, and could be possible to a similar altitude as position of 382b'. After certain extent of reaction, CNF-catalyst complexes with certain density will be exported via 384.

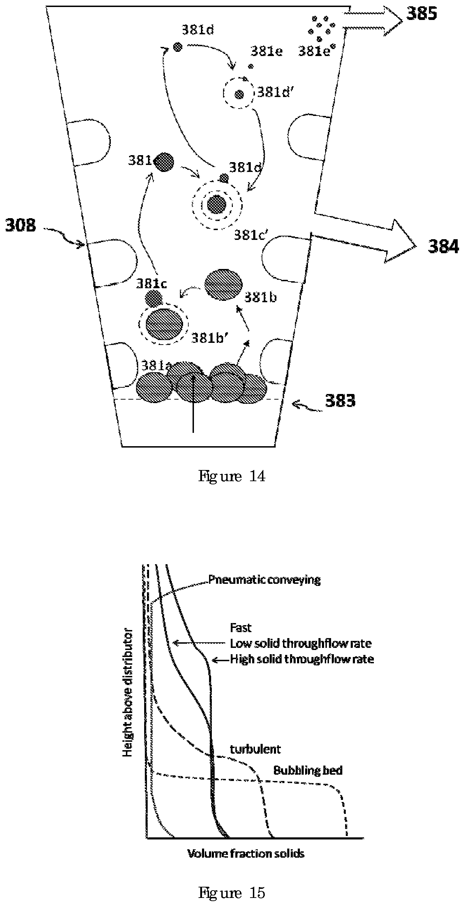

In another embodiment, as illustrated in Figure 14, when catalyst 381b rises and it starts splitting the hydrocarbon gas, CNFs will grow on its surface and its density becomes higher as shown in 381b', eventually falls to a lower altitude. Under the strong gas velocity, CNFs with smaller density will detach from its surface and may rise up to a higher altitude. In classical FB reactor, fine particles in higher altitude will be transported away, however in our new designed chamber, gas pressure at the top is lower and therefore can be subjected to a longer retention time. As shown in Figure 14, 381c will exert its catalytic effect and further grow CNTs and later become 381c'. Similarly, 381d with lower density may detach from 81c' and will rise up to a higher level and the reaction will be continued. As hydrocarbon gases are kept splitting during the process, the physical density and diameter of materials will be increased correspondingly. Up to certain extent of the increase of mass, it falls down to a lower altitude. As such, the flow of solid and the reactant gas would become countercurrent. The looping of the polydensity materials would combined by the coarse at the bottom while the fine at the top could enhance the gas-solid heterogeneous reaction.

The back-looping or back-mixing of solids could have a longer retention time inside the chamber. The original transport materials will be entrained and directed back into the reactor for further reaction. Studies have shown that a stronger reactant gas velocity can be applied in fluidization and therefore the rate of reaction and yield of products will be increased due to the better mixing of reactants and catalysts. The yield of CNFs and hydrogen can be at least 2 times higher by using this chamber deisgn. In addition, the stronger gas velocity used can turn the FB reactor from the bubbling type into fast, turbulent or even pneumatic fluidization, as shown in Figure 15.

With regard to heat and reactant gas supply, conventional designed chamber usually feeds the masses/reactant gas and provides heat in an updraft manner, i.e. feedstock at the bottom. As such, when the smaller catalysts or detached CNFs reach the top of the chamber, the available thermal energy for catalytic splitting is not sufficient, and would lead the similar drawbacks as mentioned above. In addition, carbon materials itself can exert carbonous effect on hydrocarbon gas splitting. However, such prominent effect would be suspended due to lower thermal energy supply and its heat supply at the bottom. To the contrary, the present invention has adpoted an approach of providing heat in a downdraft manner.

As indicated in the Figure 11, the hot gases 315 and 316 passing along the pipes from 305a to 305b and 306a to 306b respectively still possess high thermal energy, as they are just transported away from the gasifier and the combustor. As such, the thermal energy tends to remain higher along the chamber. This is beneficial to the hydrocarbon gas splitting as it is an energy initiated reaction. By comparison, the conventional chamber, the thermal energy at the top of a conventional chamber is insufficient for hydrocarbon gas splitting. In such case, there would not be too much auxiliary energy to supply from 5b to 5c before it enters to the CVD chamber.

It should be understood that certain features of the invention, which are, for clarity, described in the content of separate embodiments, may be provided in combination in a single embodiment. Conversely, various features of the invention which are, for brevity, described in the content of a single embodiment, may be provided separately or in any appropriate sub-combinations. It is to be noted that certain features of the embodiments are illustrated by way of non-limiting examples. Also, a skilled person in the art will be aware of the prior art which is not explained in the above for brevity purpose.

## Claims

1. A system for production of hydrogen gas, carbon materials and/or carbon monoxide gas, comprising a chamber for gasification, a chamber for combustion and a chamber for chemical vapour deposition, wherein:

   (a) the gasification chamber and the combustion chamber are connected by a first channel configured to allow materials to travel from the gasification chamber to the combustion chamber;
   (b) a second channel configured to allow materials to return from the combustion chamber to the gasification chamber;
   (c) a third channel configured to allow materials to be fed from the gasification chamber into the chemical vapor deposition chamber; and
   (d) a fourth channel configured to allow materials from the combustion chamber to fed into the chemical vapor deposition chamber,

   wherein the chemical vapour deposition chamber includes an upwardly extending wall defining a cavity having a lower portion and an upper portion with the upper portion having a volume capacity larger than a volume capacity of the lower portion, and wherein the wall defines an internal surface provided with a plurality of protrusions extending into the cavity for reducing horizontal cross section of the cavity thereat, further wherein the chemical vapour deposition chamber is designed with widening in cross section towards the top.

2. A system as claimed in Claim 1, comprising a source to provide heating to the combustion chamber, wherein the source includes fossil fuels combustion, electricity, waste heat installations such as solar/thermal collection, gasification, hydro-cracking or steam reforming of fossil fuels or the combination thereof.

3. A system as claimed in Claim 1 or 2, wherein the third channel is configured to feed hot synthesized gas from the gasification chamber into the chemical vapour deposition chamber, wherein the third channel comprises means for providing additional heating to the hot synthesized gas before the hot synthesized gas enters the chemical vapour deposition chamber, and wherein the system further comprises an auxiliary heating unit arranged to supply heat to the third channel such that content passing via the third channel may be heated before entering the chemical vapour deposition chamber.

4. A system as claimed in any preceding claim, the fourth channel is configured to pass through the chemical vapour deposition chamber such that heat from exhaust gas in the fourth channel is transferred to the chemical vapour deposition chamber.

5. A system as claimed in Claim any preceding claim, comprising a heat exchanger arranged to transfer heat from the gasification chamber and the combustion chamber to the chemical vapour deposition chamber, and wherein the heat exchanger is located between or adjacent the third channel and the fourth channel.

6. A system as claimed in any preceding claim, wherein the gasification chamber and the chemical vapour deposition chamber are configured to allow synthesized gas to downdrift through heat exchanging channels to the chemical vapour deposition chamber separated from the gasification chamber.

7. A system as claimed in any preceding claim, wherein the chemical vapour deposition chamber contains fluidized solid bed material derived from materials from a gasification process running in cooperation or parallel with production of hydrogen gas or splitting of hydrocarbon gas, and wherein carbon generated on the fluidized solid bed material is fed into the gasification chamber for increasing the yield of hydrogen production thereof.

## Patentansprüche

1. System zur Herstellung von Wasserstoffgas, Kohlenstoffmaterialien und/oder Kohlenmonoxidgas, umfassend eine Kammer zur Vergasung, eine Kammer zur Verbrennung und eine Kammer zur chemischen Gasphasenabscheidung, wobei

   (a) die Vergasungskammer und die Brennkammer durch einen ersten Kanal verbunden sind, der so konfiguriert ist, dass die Materialien von der Vergasungskammer in die Brennkammer gelangen können;
   (b) einen zweiten Kanal, der so konfiguriert ist, dass Materialien aus der Brennkammer in die Vergasungskammer zurückkehren können;
   (c) einen dritten Kanal, der so konfiguriert ist, dass Materialien aus der Vergasungskammer in die Kammer für die chemische Gasphasenabscheidung eingespeist werden können; und
   (d) einen vierten Kanal, der so konfiguriert ist, dass Materialien aus der Brennkammer in die Kammer für die chemische Gasphasenabscheidung eingespeist werden können,

   wobei die Kammer zur chemischen Gasphasenabscheidung eine sich nach oben erstreckende Wand aufweist, die einen Hohlraum mit einem unteren Abschnitt und einem oberen Abschnitt definiert, wobei der obere Abschnitt eine Volumenkapazität aufweist, die größer als die Volumenkapazität des unteren Abschnitts ist, und wobei die Wand eine Innenfläche definiert, die mit einer Vielzahl von Vorsprüngen versehen ist, die sich in den Hohlraum hinein erstrecken, um den horizontalen Querschnitt des Hohlraums dort zu verringern, wobei die Kammer zur chemischen Gasphasenabscheidung ferner mit einer Querschnittserweiterung nach oben hin ausgelegt ist.

2. System nach Anspruch 1, umfassend eine Quelle zur Bereitstellung von Wärme für die Brennkammer, wobei die Quelle die Verbrennung fossiler Brennstoffe, Elektrizität, Abwärmeanlagen wie solare/thermische Sammlung, Vergasung, Hydrocracken oder Dampfreformierung fossiler Brennstoffe oder die Kombination davon umfasst.

3. System nach Anspruch 1 oder 2, wobei der dritte Kanal so konfiguriert ist, dass er heißes synthetisiertes Gas aus der Vergasungskammer in die Kammer für chemische Gasphasenabscheidung einspeist, wobei der dritte Kanal Mittel zur zusätzlichen Erwärmung des heißen synthetisierten Gases umfasst, bevor das heiße synthetisierte Gas in die Kammer für chemische Gasphasenabscheidung eintritt, und wobei das System ferner eine Hilfsheizeinheit umfasst, die so angeordnet ist, dass sie dem dritten Kanal Wärme zuführt, so dass der Inhalt, der durch den dritten Kanal strömt, erwärmt werden kann, bevor er in die Kammer für chemische Gasphasenabscheidung eintritt.

4. System nach einem der vorhergehenden Ansprüche, wobei der vierte Kanal so konfiguriert ist, dass er durch die Kammer für die chemische Gasphasenabscheidung verläuft, so dass die Wärme aus dem Abgas im vierten Kanal an die Kammer für die chemische Gasphasenabscheidung übertragen wird.

5. System nach einem der vorhergehenden Ansprüche, umfassend einen Wärmetauscher, der so angeordnet ist, dass er Wärme von der Vergasungskammer und der Brennkammer zur Kammer für die chemische Gasphasenabscheidung überträgt, und wobei der Wärmetauscher zwischen oder neben dem dritten Kanal und dem vierten Kanal angeordnet ist.

6. System nach einem der vorhergehenden Ansprüche, wobei die Vergasungskammer und die Kammer für die chemische Gasphasenabscheidung so konfiguriert sind, dass synthetisiertes Gas durch Wärmeaustauschkanäle in die von der Vergasungskammer getrennte Kammer für die chemische Gasphasenabscheidung hinunterdriften kann.

7. System nach einem der vorhergehenden Ansprüche, wobei die Kammer für die chemische Gasphasenabscheidung fluidisiertes Festbettmaterial enthält, das von Materialien aus einem Vergasungsprozess abgeleitet ist, der in Kooperation oder parallel mit der Produktion von Wasserstoffgas oder der Spaltung von Kohlenwasserstoffgas abläuft, und wobei auf dem fluidisierten Festbettmaterial erzeugter Kohlenstoff in die Vergasungskammer eingespeist wird, um deren Ausbeute der Wasserstoffproduktion zu erhöhen.

**Revendications**

1. Système pour la production d'hydrogène gazeux, de matériaux en carbone et/ou de monoxyde de carbone gazeux, comprenant une chambre de gazéification, une chambre de combustion et une chambre de dépôt chimique en phase vapeur, dans lequel :

(a) la chambre de gazéification et la chambre de combustion sont reliées par un premier canal configuré pour permettre aux matériaux de passer de la chambre de gazéification à la chambre de combustion ;
(b) un second canal configuré pour permettre le retour des matériaux de la chambre de combustion vers la chambre de gazéification ;
(c) un troisième canal configuré pour permettre aux matériaux provenant de la chambre de gazéification d'être introduits dans la chambre de dépôt chimique en phase vapeur
(d) un quatrième canal configuré pour permettre aux matériaux provenant de la chambre de combustion d'être introduits dans la chambre de dépôt chimique en phase vapeur,

dans laquelle la chambre de dépôt chimique en phase vapeur comprend une paroi s'étendant vers le haut définissant une cavité ayant une partie inférieure et une partie supérieure, la partie supérieure ayant une capacité volumique supérieure à la capacité volumique de la partie inférieure, et dans laquelle la paroi définit une surface interne munie d'une pluralité de saillies s'étendant dans la cavité pour réduire la section transversale horizontale de la cavité à cet endroit, dans laquelle en outre la chambre de dépôt chimique en phase vapeur est conçue avec une section transversale s'élargissant vers le haut.

2. Système selon la revendication 1, comprenant une source pour fournir du chauffage à la chambre de combustion, dans lequel la source comprend la combustion de combustibles fossiles, l'électricité, les installations de chaleur résiduelle telles que la collecte solaire/thermique, la gazéification, l'hydrocraquage ou le reformage à la vapeur de combustibles fossiles ou la combinaison de ceux-ci.

3. Système selon la revendication 1 ou 2, dans lequel le troisième canal est configuré pour alimenter du gaz synthétisé chaud de la chambre de gazéification dans la chambre de dépôt chimique en phase vapeur, dans lequel le troisième canal comprend des moyens pour fournir une chaleur supplémentaire au gaz synthétisé chaud avant que le gaz synthétisé chaud n'entre dans la chambre de dépôt chimique en phase vapeur, et dans lequel le système comprend en outre une unité de chaleur auxiliaire agencée pour fournir de la chaleur au troisième canal de telle sorte que le contenu passant par le troisième canal puisse être chauffé avant d'entrer dans la chambre de dépôt chimique en phase vapeur.

4. Système selon l'une quelconque des revendications précédentes, le quatrième canal est configuré pour passer à travers la chambre de dépôt chimique en phase vapeur de telle sorte que la chaleur des gaz d'échappement du quatrième canal est transférée à la chambre de dépôt chimique en phase vapeur.

5. Système selon l'une quelconque des revendications précédentes, comprenant un échangeur de chaleur agencé pour transférer de la chaleur de la chambre de gazéification et de la chambre de combustion à la chambre de dépôt chimique en phase vapeur, et dans lequel l'échangeur de chaleur est situé entre ou adjacent au troisième canal et au quatrième canal.

6. Système selon l'une quelconque des revendications précédentes, dans lequel la chambre de gazéification et la chambre de dépôt chimique en phase vapeur sont configurées pour permettre au gaz synthétisé de descendre par des canaux d'échange de chaleur vers la chambre de dépôt chimique en phase vapeur séparée de la chambre de gazéification.

7. Système selon l'une quelconque des revendications précédentes, dans lequel la chambre de dépôt chimique en phase vapeur contient un matériau de lit solide fluidisé dérivé de matériaux provenant d'un procédé de gazéification fonctionnant en coopération ou en parallèle avec la production d'hydrogène gazeux ou la séparation d'hydrocarbures gazeux, et dans lequel le carbone généré sur le matériau de lit solide fluidisé est introduit dans la chambre de gazéification pour augmenter le rendement de la production d'hydrogène de celui-ci.

Figure 1

Figure 2

Figure 3

Figure 4A

Figure 4B

Figure 5A

Figure 5B

Figure 6

Figure 7

Figure 8

Figure 9

Figure 10

Figure 11

Figure 12

Figure 13

Figure 14

Figure 15

**EP 2 643 268 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- MY PI2010005575
- EP 1943187 A
- US 2985512 A
- US 2482187 A